# EUROPÄISCHE PATENTSCHRIFT

(11) **EP 0 429 525 B1**
(45) Veröffentlichungstag und Bekanntmachung des Hinweises auf die Patenterteilung: **07.01.1993**
(21) Anmeldenummer: 89909761.2
(22) Anmeldetag: 12.08.1989
(51) Int. Cl.: B60K 41/16, F16H 47/04

(54) **EINRICHTUNG UND VERFAHREN ZUM BETRIEB EINER VERSTELLBAREN ANTRIEBSEINHEIT**
ARRANGEMENT AND PROCESS FOR OPERATING A VARIABLE DRIVE UNIT
AGENCEMENT ET PROCEDE POUR FAIRE FONCTIONNER UNE UNITE DE TRANSMISSION VARIABLE

(30) Priorität: 17.08.1988 DE 3827859
(43) Veröffentlichungstag der Anmeldung: 05.06.1991
(73) Patentinhaber: ZF FRIEDRICHSHAFEN Aktiengesellschaft, 88038 Friedrichshafen (DE)
(72) Erfinder: NIKOLAUS, Heinrich, W., D-8391 Tiefenbach (DE); ARAIN, Abdul, D-8391 Kellberg (DE); PATON, Robert, D-8390 Passau (DE)
(86) Internationale Anmeldenummer: EP8900958
(87) Internationale Veröffentlichungsnummer: WO9002060

(56) Entgegenhaltungen:
- EP-A- 0 195 452
- FR-A- 2 143 154

## Beschreibung

Die Erfindung betrifft eine Einrichtung und ein Verfahren zum Betrieb einer verstellbaren Antriebseinheit für ein Kraftfahrzeug, insbesondere für Land- und Baumaschinen mit einer regelbaren Brennkraftmaschine und einem hydrostatisch-mechanischen Leistungsverzweigungsgetriebe mit stufenlos veränderlichem Übersetzungsverhältnis nach dem Oberbegriff des Anspruchs 1.

Aus der gattungsgemäßen Patentschrift (DE-C-35 12 523) ist ein stufenlos einstellbares leistungsverzweigendes Verbundlastschaltgetriebe mit Gruppenschaltungen bekannt. Das Getriebe besteht aus zwei Teilgetrieben. Das eine ist ein stufenlos einstellbares leistungsverzweigendes Koppelgetriebe mit mehreren Wellen. Das andere Teilgetriebe ist ein Schaltgetriebe mit einer Ganggruppe und mehreren Gruppengängen, die auf die Hauptabtriebswelle wirken. Die beiden Koppelwellen treiben alternativ das Schaltgetriebe an. Die Gangschaltungen erfolgen bei Synchrondrehzahlen lastfrei und ohne Zugkraftunterbrechung. Das Getriebe wirkt wie ein stufenloses Getriebe mit grobem Stellbereich und erlaubt in einem Fahrzeug das Betreiben der Brennkraftmaschine entlang der Kurve für minimalen Kraftstoffverbrauch und ermöglicht so Kraftstoffeinsparung.

Aus der Offenlegung FR-A-21 43 154 ist ein stufenlos einstellbares hydromechanisches Lastschaltgetriebe bekannt, das so eingestellt werden kann, daß bei allen Fahrzuständen die antreibende Brennkraftmaschine in ihrem besten Leistungsbereich betrieben wird. Um ein Durchdrehen der Reifen des Fahrzeugs bei voller Leistungsentfaltung der Brennkraftmaschine zu verhindern, ist im Getriebe z. B. ein Druckbegrenzungsventil im hydrostatischen Zweig des Getriebes vorgesehen, um das übertragbare maximale Drehmoment zu begrenzen. Dieses hydromechanische Lastschaltgetriebe wird zum An- und Rückwärtsfahren rein hydrostatisch betrieben.

Antriebseinheiten mit hydrostatisch-mechanischen Leistungsverzweigungsgetrieben für Kraftfahrzeuge sind in bestimmten Betriebszuständen des Kraftfahrzeugs, z. B. Anfahren und Fahren mit besonders niedriger Geschwindigkeit bei hoher Last, mit besonders hohen Verlusten behaftet. Bei stehendem Fahrzeug und eingeschaltetem ersten Fahrbereich erreicht die als Verstellpumpe ausgebildete Primäreinheit bereits im Leerlauf bei Nenndrehzahl der Brennkraftmaschine ihr maximales Fördervolumen, wodurch sich hohe hydrostatische Leerlaufverluste ergeben. Mit zunehmender Lastaufnahme beim Anfahren reduziert sich zwar das Fördervolumen der Verstellpumpe, durch die lastabhängige Druckzunahme bleiben die hydraulischen Verluste jedoch beträchtlich, so daß in diesem Betriebsbereich der Gesamtwirkungsgrad schlecht ist. Ferner führen das große Fördervolumen der Verstellpumpe bei hohen Drücken in Zusammenhang mit den von einer Brennkraftmaschine bei Nenndrehzahl auf den Hydrostaten übertragenen hohen Drehzahlen zu frühzeitigem Verschleiß und zu hoher Geräuschemission des Getriebes.

Für Kraftfahrzeuge, die häufig aus dem Stillstand anfahren und/oder Dauerbetriebszustände bei sehr niedrigen Geschwindigkeiten und hoher Last haben, wie z. B. Land- und Baumaschinen, ist der Betrieb hydrostatisch mechanischer Leistungsverzweigungsgetriebe daher besonders problematisch.

Der Erfindung liegt die Aufgabe zugrunde, eine Einrichtung und ein Verfahren zum Betrieb einer verstellbaren Antriebseinheit mit einer regelbaren Brennkraftmaschine und einem hydrostatisch-mechanischen Leistungsverzweigungsgetriebe so zu verbessern, daß Kraftfahrzeuge, die häufig anfahren und/oder bei sehr niedriger Geschwindigkeit unter hoher Last fahren, mit einem erhöhten Wirkungsgrad des Getriebes betrieben werten können bei verringertem Verschleiß, verminderter Geräuschemission und niedrigerer Brennkraftmaschinendrehzahl.

Die Aufgabe wird erfindungsgemäß dadurch gelöst, daß eine gemeinsame Regeleinrichtung für die Brennkraftmaschine und das Leistungsverzweigungsgetriebe vorgesehen ist, die in einer ersten Phase eines Anfahrvorganges unter Vollast die Drehzahl n_{Mot} der Brennkraftmaschine auf einen Wert unterhalb der Nenndrehzahl einstellt, die Verstellpumpe auf maximales Fördervolumen verschwenkt und die Schaltkupplung für den ersten Fahrbereich des Leistungsverzweigungsgetriebes einrückt, daß während einer zweiten Phase des Anfahrvorganges das Fördervolumen der Verstellpumpe durch die Regeleinrichtung bei reduzierter Drehzahl n_{Mot} verringert wird bis zum Stillstand des Hydromotors, daß in einer dritten Phase des Anfahrvorganges die Geschwindigkeit des Fahrzeugs bei stillstehendem Hydromotor durch Anhebung der Drehzahl n_{Mot} auf Nenndrehzahl erhöht wird und daß anschließend die Geschwindigkeit allein durch Veränderung des Fördervolumens der Verstellpumpe bzw. Bereichsumschaltung der Schaltkupplungen bis zur Sollgeschwindigkeit ansteigt.

Diese Einrichtung und dieses Verfahren zum Betrieb einer stufenlos verstellbaren Antriebseinheit mit einer regelbaren Brennkraftmaschine und einem hydrostatisch-mechanischen Leistungsverzweigungsgetriebe für ein Kraftfahrzeug hat die Vorteile, daß die Leistung der Brennkraftmaschine auf das Übersetzungsverhältnis des Leistungsverzweigungsgetriebes am Anfahrpunkt und bei sehr niedriger Geschwindigkeit unter hoher Last besser abgestimmt ist, so daß die Traktion des Kraftfahrzeuges optimal genutzt ist, der Leistungsfluß im hydrostatischen Getriebezweig verringert und der Gesamtwirkungsgrad des Leistungsverzweigungsgetriebes verbessert wird. Der Aufbau des Leistungsverzweigungsgetriebes wird durch diese Verbesserung nicht verändert.
Hydrostatisch-mechanische Leistungsverzweigungsgetriebe haben theoretisch ein unendliches Übersetzungsverhältnis und bieten entsprechend hohes Drehmoment beim Anfahren und bei niedriger Geschwindigkeit an den Antriebsachsen. Die Traktion eines Kraftfahrzeuges kann jedoch beim Anfahren und bei niedrigen Geschwindigkeiten nur ein begrenztes Drehmoment übertragen.
Das verfügbare Drehmoment der Brennkraftmaschine am Eingang des hydrostatisch-mechanischen Leistungsverzweigungsgetriebes kann daher reduziert werden, ohne daß hierdurch Nachteile beim Anfahren und bei niedriger Geschwindigkeit des Kraftfahrzeuges entstehen. Zusätzlich können durch die Erfindung die Belastung und der Verbrauch der Brennkraftmaschine reduziert werden.

In vorteilhafter Weise kann gemäß Anspruch 2 die Regeleinrichtung die Drehzahl der Brennkraftmaschine auf höchstens die Hälfte ihrer Nenndrehzahl beschränken. Dabei wird allerdings vermieden, daß die Leerlaufdrehzahl der Brennkraftmaschine unterschritten wird.
Fig. 1 zeigt die erfindungsgemäße Einrichtung.
Fig. 2 zeigt in einem Diagramm die Drehzahlverhältnisse und den Druckverlauf einer stufenlos verstellbaren Antriebseinheit, bestehend aus regelbarer Brennkraftmaschine und hydrostatisch-mechanischem Leistungsverzweigunsgetriebe nach dem Stand der Technik.
Fig. 3 zeigt in einem Diagramm die Drehzahlverhältnisse und den Druckverlauf einer stufenlos verstellbaren Antriebseinheit, bestehend aus regelbarer Brennkraftmaschine und hydrostatisch-mechanischem Leistungsverzweigungsgetriebe gemäß dem erfinderischen Vorschlag.

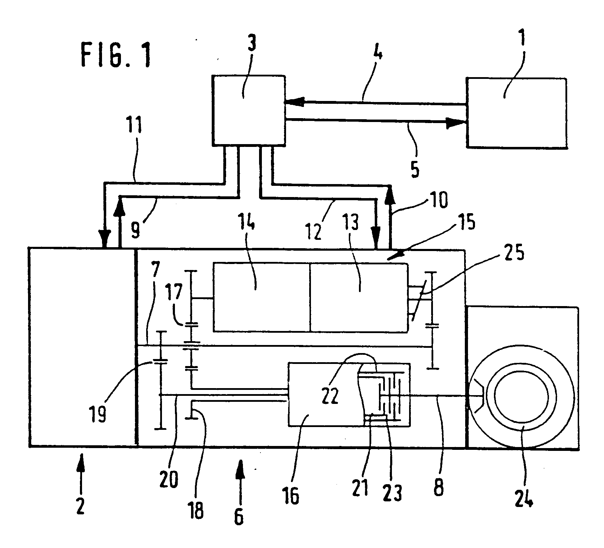

Fig. 1: An einem Fahrschalter 1 wird eine frei wählbare Geschwindigkeit eingestellt. Am Fahrschalter 1 kann ein Economy-Programm zum Betrieb einer Brennkraftmaschine 2 bei niedrigen Verbrauchswerten und ein Vollast-Programm zum Betrieb der Brennkraftmaschine 2 bei Nenndrehzahl gewählt werden. Eine Regeleinrichtung 3 tauscht über Leitungen 4, 5 elektrische Signale, z. B. Vorgabe und Rückmeldung, mit dem Fahrschalter 1 aus. Eine verstellbare Antriebseinheit besteht aus einer regelbaren Brennkraftmaschine 2 herkömmlicher Bauart, die ein hydrostatisch-mechanisches Leistungsverzweigungsgetriebe 6 antreibt. Zwischen der Brennkraftmaschine 2 und dem Leistungsverzweigungsgetriebe 6 befindet sich keine schaltbare Kupplung. Die Regeleinrichtung 3 bekannter Bauart, z. B. eine elektronische Regeleinrichtung, kontrolliert automatisch die Drehzahl der Brennkraftmaschine 2 und das Übersertzungsverhältnis des stufenlos verstellbaren hydrostatisch-mechanischen Leistungsverzweigungsgetriebes 6, so daß die vorgewählte Geschwindigkeit angesteuert wird. Hierzu befinden sich nicht dargestellte Meßwertaufnehmer an einer motordrehzahlabhängig angetriebenen Eingangswelle 7 und an einer Getriebeausgangswelle 8, die die Wellendrehzahlen über Leitungen 9, 10 an die Regeleinrichtung 3 weitergeben. Die Regeleinrichtung 3 vergleicht die Drehzahlmeßwerte mit den Vorgaben vom Fahrschalter 1. In Abhängigkeit von in der Regeleinrichtung 3 gespeicherten Fahrprogrammen gehen von der Regeleinrichtung 3 Stellsignale über die Leitungen 11, 12 an die Brennkraftmaschine 2 und an das Leistungsverzweigungsgetriebe 6.

Die Regelung der Brennkraftmaschine erfolgt in üblicher Weise durch Drosselung des Luftansaugquerschnittes oder durch Regelung der Brennstoffeinspritzmenge.

Das Übersetzungsverhältnis des hydrostatisch-mechanischen Leistungsverzweigungsgetriebes 6 kann stufenlos verändert werden, imdem das Fördervolumen der Primäreinheit 13 und damit die Drehzahl einer als Hydromotor ausgebildeten Sekundäreinheit 14 des hydrostatischen Zweiges 15 des Getriebes 6 kontinuierlich verstellt wird. Die als Verstellpumpe ausgebildete Primäreinheit 13 im hydrostatischen Getriebezweig 15 ist über die Antriebswelle 7 von der regelbaren Brennkraftmaschine 2 direkt angetrieben und dreht sich mit einer Drehzahl proportional zur Drehzahl der Brennkraftmaschine 2. Der kontinuierliche Übersetzungsbereich des hydrostatischen Getriebezweiges 15 im Leistungsverzweigungsgetriebe 6 wird durch Getriebeelemente, z. B. Planetengetriebe im mechanischen Getriebezweig 16 des Leistungsverzweigungsgetriebes 6, vervielfacht.

Die Brennkraftmaschine 2 treibt über ein Vorgelege 19 und eine Welle 20 den mechanischen Getriebezweig 16 an, der mindestens ein Koppelgetriebe (nicht dargestellt) enthält. Koppelwellen 21, 22 der Koppelgetriebe sind angetrieben mit stufenlos variablen Drehzahlen, die sich aus der Summierung der stufenlos variablen Drehzahlen des Hydromotors 14 und der konstanten Drehzahl der Welle 20 ergeben.

Kupplungen 23 verbinden wahlweise eine der Koppelwellen 21 oder 22 mit der Getriebeausgangswelle 8, die eine Hinterachse 24 antreibt.

### Funktionsbeschreibung:

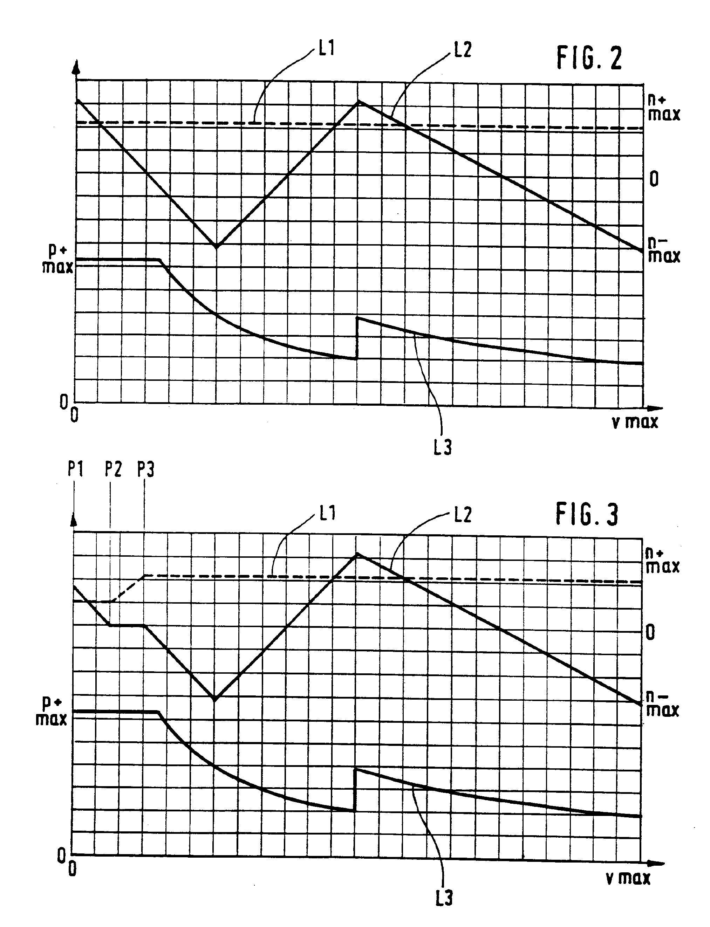

Fig. 2: Nach dem Stand der Technik erfolgt das Anfahren mit einer stufenlos verstellbaren Antriebseinheit unter Vollast aus dem Stand bei Nenndrehzahl der Brennkraftmaschine 2 (Linie L1). Die Drehzahl der Brennkraftmaschine 2 bleibt über den gesamten Geschwindigkeitsbereich konstant. Die Verstellpumpe 13 ist von der Brennkraftmaschine 2 direkt angetrieben und dreht mit einer zur Nenndrehzahl der Brennkraftmaschine 2 proportionalen Geschwindigkeit. Linie L2 zeigt den Drehzahlverlauf des Hydromotors 14 und Linie L3 den Druckverlauf im Hydrostaten 15 über der Geschwindigkeit mit dessen absolutem Maximum im Anfahrbereich.

Fig. 3, Punkt P1: Zum Anfahren des Kraftfahrzeuges unter Vollast nimmt die Regeleinrichtung 3 gemäß der Erfindung zunächst die Nenndrehzahl der Brennkraftmaschine 2 zurück, so daß die Brennkraftmaschine 2 mit niederer Drehzahl oder höchstens mit halber Nenndrehzahl läuft. Die Verstellpumpe 13 im Hydrostaten 15 dreht dann ebenfalls mit der Hälfte der Nenndrehzahl und treibt mit zunehmendem Fördervolumen den Hydromotor 14 an. Hat der Hydromotor 14 im Hydrostaten 15 eine Drehzahl erreicht, deren Summierung mit einer konstanten Drehzahl in einem Koppelgetriebe (nicht dargestellt) an der den 1. Fahrbereich betreffenden Koppelwelle 21 oder 22 die Drehzahl Null erzeugt, betätigt die Regeleinrichtung 3 die Kupplung 23 für den ersten Schaltbereich des mechanischen Getriebezweiges 16. An der Ausgangswelle 8 des Leistungsverzweigungsgetriebes ist dann die Drehzahl noch gleich Null.

P1 - P2: Die Regeleinrichtung 3 wirkt auf die Verstellvorrichtung 25 und reduziert das Fördervolumen der Verstellpumpe 13. Die Drehzahl des Hydromotors 14 (Linie L2) nimmt ab. Die Drehzahl der Welle 20 des mechanischen Getriebezweiges 16 bleibt proportional zur konstanten Drehzahl der Brennkraftmaschine 2. Die Summierung der abnehmenden und der konstanten Drehzahl im Koppelgetriebe ergibt eine Differenzdrehzahl, die Getriebeausgangswelle 8 beginnt sich zu drehen, und das Kraftfahrzeug setzt sich in Bewegung.

Punkt P2: Die Verstellpumpe 13 fördert nur noch die Menge, die nötig ist, um den Hydromotor 14 bei Drehzahl Null zu halten und Leckageverlust auszugleichen.

P2 - P3: Die weitere Anhebung der Kraftfahrzeuggeschwindigkeit erfolgt über Anhebung der Drehzahl der Brennkraftmaschine 2 (Linie L1) bis zur Nenndrehzahl. Die Drehzahl der Verstellpumpe 13 und des mechanischen Zweigs 16 des Leistungsverzweigungsgetriebes 6 erhöht sich proportional zur Drehzahl der Brennkraftmaschine 2. Das Fördervolumen der Verstellpumpe 13 bleibt konstant gering (Linie L2). Die Drehzahl des Hydromotors 14 ist weiterhin Null. Der Leistungsfluß durch den Hydrostaten 15 ist gering, und das Getriebe 6 läuft bei einem günstigen Wirkungsgrad.

Ab Punkt P3: Die Geschwindigkeit wird weiter angehoben, indem die Verstellpumpe 13 weiter auf ein größeres Fördervolumen geregelt wird, so daß der Hydromotor 14 wieder beschleunigt wird (Linie L2). Die Brennkraftmaschine 2 bleibt konstant bei Nenndrehzahl (Linie L1). Die vorgewählte Geschwindigkeit des Kraftfahrzeuges wird durch Umschaltung im mechanischen Getriebezweig 16 und Änderung des Fördervolumens im hydrostatischen Getriebezweig 15 des Leistungsverzweigungsgetriebes 6 erreicht.

Vorzugsweise wird zum Anfahren unter Last die Drehzahl der Brennkraftmaschine 2 beim Stillstand des Kraftfahrzeuges auf die Hälfte der Nenndrehzahl geregelt und behält dann diese Drehzahl bei, während die Verstellpumpe 13 das Fördervolumen reduziert. Bei Stillstand des Hydromotors 14 im Hydrostaten 15 soll dann die weitere Geschwindigkeitserhöhung des Kraftfahrzeuges durch Anheben der Drehzahl der Brennkraftmaschine 2 bis Nenndrehzahl erreicht werden, und daran anschliebenß soll die weitere Geschwindigkeitserhöhung des Kraftfahrzeuges wieder durch die Verstellung des Leistungsverzweigungsgetriebes 6 erfolgen, bis die vorgewählte Geschwindigkeit erreicht ist.

Im Rahmen der Erfindung ist aber auch eine andere Aufteilung der Anteile, die die Drehzahländerung der Brennkraftmaschine 2 an der Erhöhung der Geschwindigkeit des Kraftfahrzeuges beim Anfahren unter Vollast hat, möglich.

### Bezugszeichen

- 1: Fahrschalter
- 2: Brennkraftmaschine
- 3: Regeleinrichtung
- 4: Leitung
- 5: Leitung
- 6: Leistungsverzweigungsgetriebe
- 7: Welle
- 8: Getriebeausgangswelle
- 9: Leitung
- 10: Leitung
- 11: Leitung
- 12: Leitung
- 13: Verstellpumpe
- 14: Hydromotor
- 15: Hydrostatischer Getriebezweig
- 16: Mechanischer Getriebezweig
- 17: Vorgelege
- 18: Hohlwelle
- 19: Vorgelege
- 20: Welle
- 21: Koppelwelle
- 22: Koppelwelle
- 23: Kupplung
- 24: Hinterachse
- n_{Mot}: Drehzahl der Brennkraftmschine
- Linie L1: Brennkraftmaschinendrehzahlverlauf über der Kfz-Geschwindigkeit
- Linie L2: Hydromotordrehzahlverlauf über der Kfz-Geschwindigkeit
- Linie L3: Hydrostatdruckverlauf über der Kfz-Geschwindigkeit
- Punkt P1: Anfahrpunkt
- P1 - P2: Fördervolumenreduktion bei konstanter Drehzahl der Brennkraftmaschine
- P2 - P3: Brennkraftmaschinendrehzahlanhebung bei konstantem Fördervolumen

## Patentansprüche

1. Verfahren zum Betrieb einer Antriebseinheit für Kraftfahrzeuge, insbesondere für Land- und Baumaschinen, die aus einer in ihrer Drehzahl n_{Mot} regelbaren Brennkraftmaschine (2) und einem stufenlos verstellbaren hydrostatisch-mechanischen Leistungsverzweigungsgetriebe (6) besteht, dessen mehrwelliges Koppelgetriebe (16) und dessen eine Verstellpumpe (13) aufweisendes Stellgetriebe von der Brennkraftmaschine angetrieben werden, wobei eine Drehzahl eines Hydromotors (14) des Stellgetriebes dem Koppelgetriebe überlagert wird und wobei Koppelwellen (21,22) des Koppelgetriebes die an Stellbereichsgrenzen des Stellgetriebes synchrone Drehzahlen aufweisen, über Schaltkupplungen (23) wechselweise mit einer Ausgangswelle (8) verbindbar sind, dadurch **gekennzeichnet**, daß in einer ersten Phase eines Anfahrvorganges unter Vollast die Drehzahl n_{Mot} auf einen Wert unterhalb der Nenndrehzahl eingestellt wird und die Verstellpumpe (13) auf maximales Fördervolumen verschwenkt und die Schaltkupplung (23) für den ersten Fahrbereich des Leistungsverzweigungsgetriebes (6) eingerückt wird,
daß während einer zweiten Phase (P1 - P2) des Anfahrvorganges das Fördervolumen der Verstellpumpe (13) bei reduzierter Drehzahl n_{Mot} bis zum Stillstand des Hydromotors (14) verringert wird,
daß in einer dritten Phase des Anfahrvorganges (P2 - P3) die Geschwindigkeit des Fahrzeuges bei stillstehendem Hydromotor (14) durch Anhebung der Drehzahl n_{Mot} auf Nenndrehzahl erhöht wird und
daß anschließend die Geschwindigkeit allein durch Veränderung des Fördervolumens der Verstellpumpe (13) bzw. Bereichsumschaltung der Schaltkupplungen (23) bis zur Sollgeschwindigkeit ansteigt.

2. Verfahren zum Betrieb einer Antriebseinheit für Kraftfahrzeuge nach Anspruch 1, dadurch **gekennzeichnet**, daß beim Anfahren des Kraftfahrzeuges unter Vollast zunächst die Brennkraftmaschinendrehzahl n_{Mot} auf höchstens die Hälfte der Nenndrehzahl beschränkt wird, unter der Voraussetzung, daß dabei die Leerlaufdrehzahl nicht unterschritten wird.

3. Einrichtung zum Betrieb einer Antriebseinheit für Kraftfahrzeuge, insbesondere für Land- und Baumaschinen, die aus einer in ihrer Drehzahl n_{Mot} regelbaren Brennkraftmaschine (2) und einem stufenlos verstellbaren hydrostatisch-mechanischen Leistungsverzweigungsgetriebe (6) besteht, dessen mehrwelliges Koppelgetriebe (16) und dessen eine Verstellpumpe (13) aufweisendes Stellgetriebe von der Brennkraftmaschine angetrieben werden, wobei eine Drehzahl eines Hydromotors (14) des Stellgetriebes dem Koppelgetriebe überlagert wird und wobei Koppelwellen (21,22) des Koppelgetriebes, die an Stellbereichsgrenzen des Stellgetriebes synchrone Drehzahlen aufweisen, über Schaltkupplungen (23) wechselweise mit einer Ausgangswelle (8) verbindbar sind, dadurch **gekennzeichnet**, daß eine gemeinsame Regeleinrichtung (3) für die Brennkraftmaschine (2) und das Leistungsverzweigungsgetriebe (6) vorgesehen ist, die in einer ersten Phase eines Anfahrvorganges unter Vollast die Drehzahl n_{Mot} auf einen Wert unterhalb der Nenndrehzahl einstellt, die Verstellpumpe (13) auf maximales Fördervolumen verschwenkt und die Schaltkupplung (23) für den ersten Fahrbereich des Leistungsverzweigungsgetriebes (6) einrückt,
daß während einer zweiten Phase (P1 - P2) des Anfahrvorganges das Fördervolumen der Verstellpumpe (13) durch die Regeleinrichtung (3) bei reduzierter Drehzahl n_{Mot} verringert wird bis zum Stillstand des Hydromotors (14),
daß in einer dritten Phase des Anfahrvorganges (P2 - P3) die Geschwindigkeit des Fahrzeuges bei stillstehendem Hydromotor (14) durch Anhebung der Drehzahl n_{Mot} auf Nenndrehzahl erhöht wird und
daß anschließend die Geschwindigkeit allein durch Veränderung des Fördervolumens der Verstellpumpe (13) bzw. Bereichsumschaltung der Schaltkupplungen (23) bis zur Sollgeschwindigkeit ansteigt.

4. Einrichtung zum Betrieb einer Antriebseinheit für Kraftfahrzeuge nach Anspruch 3, dadurch **gekennzeichnet**, daß die Regeleinrichtung (3) beim Anfahren des Kraftfahrzeuges unter Vollast zunächst die Brennkraftmaschinendrehzahl n_{Mot} auf höchstens die Hälfte der Nenndrehzahl beschränkt unter der Voraussetzung, daß dabei die Leerlaufdrehzahl nicht unterschritten wird.

## Claims

1. A process for operating a drive unit for motor vehicles, in particular agricultural and construction machinery, comprising a controllable combustion engine (2) with variable speed and a continuously-variable hydrostatic-mechanical powersplit transmission (6), incorporating a multiple-shaft coupling gear (16) and variable ratio gear provided with a variable displacement pump (13), said coupling gear and variable ratio gear being driven by a combustion engine, whereby one speed of one hydraulic motor (14) of the variable ratio gear is superimposed onto the coupling gear, and in which coupling shafts (21, 22) of the coupling gear having synchromesh speeds at the variable range limits of the variable ratio gear, are alternately connectable to an output shaft (8) via separating clutches (23),
**characterised in that**
during an initial phase of the starting off process under full load, the engine speed is set to a value below the nominal speed, the variable displacement pump (13) is set to maximum displacement volume, and the separating clutch (23) is engaged for the initial driving range of the powersplit transmission (6),
and during a second phase (P1 - P2) of the starting off process the delivery volume of the variable displacement pump (13) is reduced at lower engine speeds until the hydraulic motor (14) is stationary,
and in a third phase of the starting off process (P2 to P3) the vehicle speed is increased when the hydraulic motor (14) is stationary by raising the engine speed to the nominal speed,
and the vehicle speed is subsequently increased solely by varying the delivery volume of the variable displacement pump (13) and/or the range-change operation of the separating clutches (23) until the required speed is attained.

2. A process for operating a drive unit for motor vehicles according to Claim 1,
**characterised in that**
when starting off the vehicle under full load, the combustion engine speed is initially restricted to a maximum of half nominal speed, under the condition that this does not cause the engine speed to drop below idling speed.

3. An arrangement for operating a drive unit for motor vehicles, in particular agricultural and construction machinery, comprising a controllable combustion engine (2) with variable speed and a continuously-variable hydrostatic-mechanical powersplit transmission (6), incorporating a multiple-shaft coupling gear (16) and variable ratio gear provided with a variable displacement pump (13), said coupling gear and variable ratio gear being driven by a combustion engine, whereby one speed of one hydraulic motor (14) of the variable ratio gear is superimposed onto the coupling gear, and in which coupling shafts (21, 22) of the coupling gear having synchromesh speeds at the variable range limits of the variable ratio gear, are alternately connectable to an output shaft (8) via separating clutches (23),
**characterised in that**
the combustion engine (2) and powersplit transmission (6) are provided with a common control unit (3), by means of which the engine speed is set to a value below the nominal speed during an initial phase of the starting off process under full load, the variable displacement pump (13) is set to maximum displacement volume, and the separating clutch (23) is engaged for the initial driving range of the powersplit transmission (6),
and during a second phase (P1 - P2) of the starting off process the control unit (3) reduces the delivery volume of the variable displacement pump (13) at lower engine speeds until the hydraulic motor (14) is stationary,
and in a third phase of the starting off process (P2 to P3) the vehicle speed is increased when the hydraulic motor (14) is stationary by raising the engine speed to the nominal speed,
and the vehicle speed is subsequently increased solely by varying the delivery volume of the variable displacement pump (13) and/or the range-change operation of the separating clutches (23) until the required speed is attained.

4. An arrangement for operating a drive unit for motor vehicles according to Claim 3,
**characterised in that**
when starting off the vehicle under full load, the control unit (3) initially restricts combustion engine speed to a maximum of half nominal speed, under the condition that this does not cause the engine speed to drop below idling speed.

## Revendications

1. Procédé pour faire fonctionner une unité d'entraînement de véhicules à moteur, notamment de machines agricoles ou de chantier, ladite unité comportant un moteur à combustion (2) à vitesse réglable n_{Mot} et une transmission hydrostatique-mécanique à dérivation de puissance (6) réglable en continu dont une boîte de couplage à plusieurs arbres (16) et une transmission variable à pompe réglable (13) sont entraînées par le moteur à combustion, où une vitesse de rotation d'un moteur hydraulique (14) de la transmission variable est superposée à la boîte de couplage et où des arbres de couplage (21, 22) de la boîte de couplage, qui ont des vitesses synchrones à des limites du champ de variation de la transmission réglable, peuvent être couplés alternativement à un arbre de sortie (8) au moyen d'embrayages de commutation (23), **caractérisé** en ce que, dans une première phase d'un processus de démarrage à pleine charge, la vitesse n_{Mot} est réglée à une valeur inférieure à la vitesse nominale, la pompe réglable (13) est réglée à son débit maximal et l'embrayage (23) prévu pour le premier domaine de marche de la transmission à dérivation de puissance (6) est fermé,
en ce que, pendant une deuxième phase (P1-P2) du processus de démarrage, le débit de la pompe réglable (13) est réduit progressivement jusqu'à l'arrêt du moteur hydraulique (14) avec maintien de la vitesse n_{Mot} réduite,
en ce que, dans une troisième phase (P2-P3) du processus de démarrage, la vitesse du véhicule est élevée par augmentation de la vitesse n_{Mot} jusqu'à la vitesse nominale pendant que le moteur hydraulique (14) est à l'arrêt,
et en ce qu'ensuite la vitesse du véhicule augmente jusqu'à la vitesse voulue uniquement par variation du débit de la pompe réglable (13) et/ou par changement de domaine au moyen des embrayages de commutation (23).

2. Procédé pour faire fonctionner une unité d'entraînement de véhicules à moteur selon la revendication 1, **caractérisé** en ce que, lors du démarrage du véhicule à pleine charge, la vitesse n_{Mot} du moteur à combustion est limitée initialement au maximum à la moitié de la vitesse nominale, à condition de ne pas être inférieure à la vitesse de ralenti.

3. Dispositif pour faire fonctionner une unité d'entraînement de véhicules à moteur, notamment de machines agricoles ou de chantier, ladite unité comportant un moteur à combustion (2) à vitesse réglable n_{Mot} et une transmission hydrostatique-mécanique à dérivation de puissance (6) réglable en continu dont une boîte de couplage à plusieurs arbres (16) et une transmission variable à pompe réglable (13) sont entraînées par le moteur à combustion, où une vitesse de rotation d'un moteur hydraulique (14) de la transmission variable est superposée à la boîte de couplage et où des arbres de couplage (21, 22) de la boîte de couplage, qui ont des vitesses synchrones à des limites du champ de variation de la transmission réglable, peuvent être couplés alternativement à un arbre de sortie (8) au moyen d'embrayages de commutation (23), **caractérisé** en ce qu'il est prévu une unité de réglage (3) commune pour le moteur à combustion (2) et pour la transmission à dérivation de puissance (6), en ce que cette unité, dans une première phase d'un processus de démarrage à pleine charge, règle la vitesse n_{Mot} à une valeur inférieure à la vitesse nominale, règle la pompe réglable (13) à son débit maximal et ferme l'embrayage (23) prévu pour le premier domaine de marche de la transmission à dérivation de puissance (6),
en ce que, pendant une deuxième phase (P1-P2) du processus de démarrage, le débit de la pompe réglable (13) est réduit progressivement par l'unité de réglage (3) jusqu'à l'arrêt du moteur hydraulique (14) avec maintien de la vitesse n_{Mot} réduite,
en ce que, dans une troisième phase (P2-P3) du processus de démarrage, la vitesse du véhicule est élevée par augmentation de la vitesse n_{Mot} jusqu'à la vitesse nominale pendant que le moteur hydraulique (14) est à l'arrêt,
et en ce qu'ensuite la vitesse du véhicule augmente jusqu'à la vitesse voulue uniquement par variation du débit de la pompe réglable (13) et/ou par changement de domaine au moyen des embrayages de commutation (23).

4. Dispositif pour faire fonctionner une unité d'entraînement de véhicules à moteur selon la revendication 3, **caractérisé** en ce que lors du démarrage du véhicule à pleine charge, l'unité de réglage (3) limite initialement la vitesse n_{Mot} du moteur à combustion au maximum à la moitié de la vitesse nominale, à condition de ne pas descendre au-dessous de la vitesse de ralenti.
